# EUROPEAN PATENT SPECIFICATION

(11) **EP 4 258 636 B1**
(45) Date of publication and mention of the grant of the patent: **07.01.2026**
(21) Application number: 21900611.1
(22) Date of filing: 30.11.2021
(51) Int. Cl.: H04N 1/00, G06F 3/0486, G06F 3/0488, G06F 3/0484, G06F 3/04883

(54) **INFORMATION PROCESSING DEVICE AND INFORMATION PROCESSING PROGRAM**
INFORMATIONSVERARBEITUNGSVORRICHTUNG UND INFORMATIONSVERARBEITUNGSPROGRAMM
DISPOSITIF DE TRAITEMENT D'INFORMATIONS ET PROGRAMME DE TRAITEMENT D'INFORMATIONS

(30) Priority: 02.12.2020 JP 2020200491
(43) Date of publication of application: 11.10.2023
(73) Proprietor: FUJIFILM Corporation, Tokyo 106-8620 (JP)
(72) Inventor: WATANABE, Tetsuya, Yokohama-shi, Kanagawa 220-0012 (JP); HIROYA, Yui, Yokohama-shi, Kanagawa 220-0012 (JP); SATAKE, Masanori, Yokohama-shi, Kanagawa 220-0012 (JP)
(74) Representative: Meissner Bolte Partnerschaft mbB
(86) International application number: PCT/JP2021/043958
(87) International publication number: WO 2022/118858

(56) References cited:
- JP-A- 2009 521 753
- JP-A- 2013 196 267
- JP-A- 2015 130 015
- JP-A- 2018 124 781
- JP-A- 2019 067 260
- JP-A- H08 234 914
- US-A1- 2012 322 461
- US-A1- 2018 217 735

## Description

### Technical Field

The technology of the present disclosure relates to an information processing device and an information processing program.

### Background Art

For example, Japanese Patent Application Laid-Open (JP-A) No. 2018-51222 describes an information processing device including a user interface that executes various processes on a game medium. The information processing device includes: a display unit that displays a game medium; an operation unit that receives a first input operation of selecting the game medium by a user and a second input operation of instructing a process on the game medium selected by the first input operation, and outputs first input operation data in which the first input operation is associated with coordinate information and second input operation data in which the second input operation is associated with coordinate information; a storage unit that stores information in which the process on the game medium is associated with a direction; and a control unit. The control unit specifies the selected game medium based on the first input operation data, acquires information from the storage unit, specifies the direction from a start point to an end point of the second input operation based on the second input operation data, and executes a process at a position associated with the direction from the start point to the end point of the second input operation in the information on the selected game medium.

For example, Japanese Patent Application Laid-Open (JP-A) No. 2013 -182528 describes an information processing device related to an operation related to sliding and an operation related to selection of a user on a touch panel. The information processing device includes a touch panel unit that detects a pressed position and a determination unit. When a release operation on the touch panel unit is detected, the determination unit determines that an operation received by the touch panel unit from a touch operation to the release operation is an operation related to sliding in a case in which a movement distance of the pressed position detected during a period from the touch operation on the touch panel unit immediately before the release operation to the release operation is equal to or greater than a first threshold. The determination unit determines that the operation received by the touch panel unit from the touch operation to the release operation is an operation related to a selection in a case in which the movement distance is less than the first threshold and a time period from the touch operation to the release operation is equal to or greater than a second threshold.

US2018/217735 describes a GUI interaction technique in a photo album editing tool, where a dragged photo can be moved towards its initial position when it is released on the way to its destination.

US2012/322461 describes a GUI interaction technique on the display unit of an image forming apparatus based on a slide mark and a mechanism to handle the slide mark released halfway.

### SUMMARY OF INVENTION

### Technical Problem

Meanwhile, in a user interface (UI) screen of a touch panel system, a slide start function using a touch button may be mounted as an instruction unit that gives an instruction to execute an operation.

In this instruction unit, in a case in which the user executes a movement operation such as dragging or sliding on the operation unit and the operation unit is moved over a start area to an execution position in an execution area, a predetermined operation is executed.

Here, the user releases the movement operation on the way before the predetermined operation is executed in some cases. After the releasing, it is considered that a behavior reflecting the movement operation at a time point of the releasing can be executed by automatically executing or stopping the operation in accordance with the release position. However, the behavior executed in a case in which the movement operation is released on the way is not a behavior intended by the user in some cases.

An object of the disclosure is to provide an information processing device and an information processing program capable of preventing an unintended behavior of a user in a case in which a movement operation is released on the way.

### Solution to Problem

In order to achieve the above object, according to a first aspect, an information processing device includes a processor. The processor move an operation unit so as to follow a movement operation performed by a user on the operation unit displayed on a display unit. The processor execute a predetermined operation after operation unit completes the movement from an initial position to an execution position on the display unit. The processor move the operation unit toward the initial position or the execution position in accordance with a release position other than by a user operation in a case in which the movement operation is released on the way from the initial position to the execution position. The processor stop the movement of the operation unit in a case in which the user selects a predetermined position of the display unit while the operation unit is moved other than by the user operation.

An information processing device according to a second aspect may be the information processing device according to the first aspect in which execution of the predetermined operation of the operation unit is cancelled in a case in which a selection is released without performing another operation after the stopping.

An information processing device according to a third aspect may be the information processing device according to the first aspect in which, in a case in which a selection is released without performing another operation after the stopping, the processor maintains a state in which movement of the operation unit is stopped, and enables the movement operation.

An information processing device according to a fourth aspect may be the information processing device according to any one of the first to third aspects in which the processor executes the movement operation again from a stopped position after the stopping, and perform the predetermined operation in a case in which the movement operation is released after movement of the operation unit in a direction corresponding to the execution position.

An information processing device according to a fifth aspect may be the information processing device according to any one of the first to fourth aspects in which the processor perform the movement operation again from the stopped position after the stopping, and cancell the execution of the predetermined operation in a case in the movement operation is released after the movement of the operation unit in a direction corresponding to the initial position.

An information processing device according to a sixth aspect may be the information processing device according to any one of the first to fifth aspects in which the predetermined position is different and the predetermined position is configured to be wider than an operable area at which the movement operation is enabled.

An information processing device according to a seventh aspect may be the information processing device according to any one of the first to fifth aspects in which the predetermined position is different and at least one area of the operation unit, an operable area at which the movement operation is enabled, or a related area related to the predetermined operation is configured as the predetermined position.

An information processing device according to an eighth aspect may be the information processing device according to any one of the first to seventh aspects in which the processor emits an execution sound in a case in which the operation unit has moved to the execution position by movement other than by the user operation.

An information processing device according to a ninth aspect may be the information processing device according to any one of the first to eighth aspects in which the operable area at which the movement operation is enabled includes a start area on a side of the initial position and an execution area on the execution position side, the processor moves the operation unit toward the initial position other than by the user operation when the release position at which the movement operation is released on the way is the start area, and the processor moves the operation unit toward the execution position other than by the user operation when the release position at which the movement operation is released on the way is in the execution area.

An information processing device according to a tenth aspect may be the information processing device according to the ninth aspect in which the processor changes a speed of movement other than by the user operation in accordance with the release position at which the movement operation is released on the way.

An information processing device according to an eleventh aspect may be the information processing device according to any one of the first aspect to the tenth aspect in which the processor moves the stopped position of the operation unit to a position centering on the selected position.

An information processing device according to a twelfth aspect may be the information processing device according to any one of the first to eleventh aspects in which the processor notification of the stopping provided by a change in a display mode of the operation unit or by an explanation displayed on the display unit.

In order to achieve the above object, according to a thirteenth aspect, an information processing program causes a computer to execute: moving an operation unit so as to follow a movement operation performed by a user on the operation unit, which is displayed on a display unit; executing a predetermined operation after movement of the operation unit from an initial position to an execution position on the display unit is completed; moving the operation unit toward the initial position or the execution position in accordance with a release position other than by a user operation when the movement operation is released on the way from the initial position to the execution position; and stopping the movement of the operation unit when the user selects a predetermined position of the display unit while the operation unit is moved other than by the user operation.

### Advantageous Effects of Invention

According to the first and thirteenth aspects, there is an advantageous effect that it is possible to prevent an unintended behavior of a user in a case in which the movement operation is released on the way.

According to the second aspect, there is an advantageous effect that the user can immediately stop the instruction operation.

According to the third aspect, there is an advantageous effect that the user can examine and then determine a behavior of executing or stopping the operation while the operation is stopped.

According to the fourth aspect, there is an advantageous effect that the user can execute the operation by the movement operation again after the stopping.

According to the fifth aspect, there is an advantageous effect that the user can stop executing the operation by the movement operation again after the stopping.

According to the sixth and seventh aspects, there is an advantageous effect that the user can easily stop a movement without a user operation.

According to the eighth aspect, there is an advantageous effect that it is possible to reliably notify the user that the operation has been executed by the movement without a user operation.

According to the ninth aspect, there is an advantageous effect that a behavior can be executed in accordance with the area at the position at which the movement operation is released.

According to the tenth aspect, there is an advantageous effect that it is possible to allow a time for the user to determine whether or not to stop the operation unit.

According to the eleventh aspect, there is an advantageous effect that the user can stop the operation unit at any position.

According to the twelfth aspect, there is an advantageous effect that it is possible to reliably notify the user that the movement without a user operation is stopped.

### BRIEF DESCRIPTION OF DRAWINGS

Fig. 1 is a block diagram illustrating an example of an electrical configuration of an image forming device according to a first embodiment.
Fig. 2 is a block diagram illustrating an example of a functional configuration of the image forming device according to the first embodiment.
Fig. 3 is a front view illustrating an example of a UI screen according to the embodiment.
Fig. 4 is a diagram illustrating an example of a movable area 35 determined in advance for an instruction unit.
Fig. 5 is a schematic diagram illustrating an example of a relationship between a user operation and a position of a slide mark with respect to the user operation in the instruction unit displayed on a display unit.
Fig. 6 is a diagram illustrating an operation execution process according to the first embodiment.
Fig. 7 is a diagram illustrating transition of a movement in a case of releasing on the way in a start area.
Fig. 8 is a diagram illustrating transition of a movement in a case of releasing on the way in an execution area.
Fig. 9 is a diagram illustrating an example of a case in which a movement without a user operation is stopped by a touch operation.
Fig. 10 is a diagram illustrating an example of an operation in a case of movement toward an execution position after the stopping.
Fig. 11 is a diagram illustrating an example of an operation in a case of movement toward an initial position after the stopping.
Fig. 12 is a flowchart illustrating an example of a flow of a process in accordance with an information processing program according to the first embodiment.
Fig. 13 is a diagram illustrating an example of an operation mode in a case in which a tap operation is executed in a second embodiment.
Fig. 14 is a diagram illustrating an example of a mode of moving a stop position to a position at which a touch operation has been executed in a third embodiment.
Fig. 15 is a diagram illustrating an example of a modified example of a change in speed in accordance with a release position.
Fig. 16 is a diagram illustrating an example of a modified example in a case in which display content of a message is changed.

### DESCRIPTION OF EMBODIMENTS

Hereinafter, an example of a mode for carrying out the technology of the disclosure will be described in detail with reference to the drawings. The same reference numerals are given to constituent elements and processes in which the operation, operational effects, and functions have the same functions throughout the drawings, and repeated description may be omitted as appropriate. Each drawing is only schematically illustrated to the extent that the technology of the disclosure can be sufficiently understood. Therefore, the technology of the disclosure is not limited only to the illustrated examples. Furthermore, in the present embodiment, description of configurations that are not directly related to the disclosure or known configurations may be omitted in some cases.

In the embodiment, an example of an information processing device that executes a predetermined operation on an operation unit such as a mark displayed on a display unit such as a display by a user manual operation (hereinafter referred to as a user operation) on the operation unit will be described.

In the disclosure, the "operation unit" is a concept including an image displayed on a display unit such as a display. The "movement operation" is a concept including a change in an instruction position by a user operation during sequential movement. Examples of the movement operation include a user operation of moving during a touch on a display unit such as a display, for example, dragging in which a touch operation by a user continues between a start point and an end point, and a user operation such as sliding. Examples of the "start of the movement operation" include a user operation by start of a touch on a display unit such as a display, as start of an instruction by the user. Examples of the "completion of the movement operation" include a user operation by touch releasing, as end of the instruction by the user. In the "completion of the movement operation", in a case in which a touch is released before reaching an initial position or an execution position, an operation is treated as a "releasing on the way" in which the movement operation is released on the way. The "predetermined operation" is a concept including a predetermined instruction (command) executed by the processor and information indicating the instruction. Examples of the predetermined operation include a process executed by a processor itself or another processor. The "execution of an operation" is a concept including an output of a predetermined instruction (command) executed by a processor and an output of information indicating the instruction. The "stop of execution of an operation" is a concept including stop of the output of the predetermined instruction (command) executed by the processor and stop of the output of the information indicating the instruction.

### [First Embodiment]

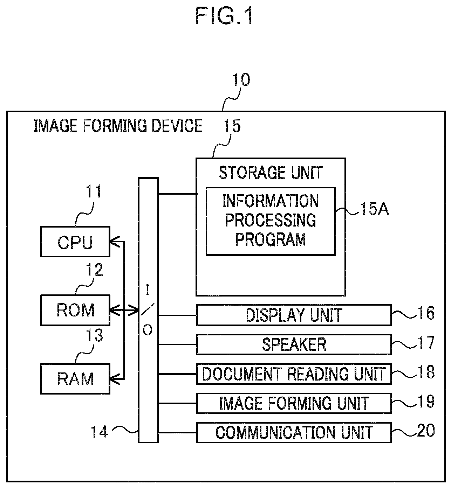

Fig. 1 is a block diagram illustrating an example of an electrical configuration of an image forming device 10 according to a first embodiment.

As illustrated in Fig. 1, the image forming device 10 according to the present embodiment includes a central processing unit (CPU) 11, a read-only memory (ROM) 12, a random access memory (RAM) 13, an input/output interface (I/O) 14, a storage unit 15, a display unit 16, a speaker 17, a document reading unit 18, an image forming unit 19, and a communication unit 20.

The image forming device 10 is an example of an information processing device. In addition to the image forming device 10, the information processing device according to the present embodiment is considered to be a general information processing device such as a smartphone, a tablet terminal, or a game device that has a UI screen in which a touch panel system is adopted, for example.

Each unit of the CPU 11, the ROM 12, the RAM 13, and the I/O 14 is connected via a bus. Functional units including the storage unit 15, the display unit 16, the speaker 17, the document reading unit 18, the image forming unit 19, and the communication unit 20 are connected to the I/O 14. These functional units can communicate with the CPU 11 via the I/O 14.

The CPU 11, the ROM 12, the RAM 13, and the I/O 14 configure a control unit. The control unit may be configured as a sub-control unit that controls some of operations of the image forming device 10 or may be configured as a part of a main control unit that controls operations of entire the image forming device 10. For some or all of the blocks of the control unit, for example, an integrated circuit such as a large scale integration (LSI) or an integrated circuit (IC) chip set is used. An individual circuit may be used for each of the blocks, or a circuit in which some or all of the blocks are integrated may be used. The blocks may be provided integrally each other, or some of the blocks may be provided separately. Some of the blocks may be provided separately. The integration of the control unit is not limited to an LSI, and a dedicated circuit or a general-purpose processor may be used.

As the storage unit 15, for example, a hard disk drive (HDD), a solid state drive (SSD), a flash memory, or the like is used. The storage unit 15 stores an information processing program 15A according to the present embodiment. The information processing program 15A may be stored in the ROM 12.

For example, the information processing program 15A may be installed in advance in the image forming device 10. The information processing program 15A may be implemented by being stored in a nonvolatile storage medium or distributed via a network and appropriately installed in the image forming device 10. As an example of the nonvolatile storage medium, a compact disc read only memory (CD-ROM), a magneto-optical disk, an HDD, a digital versatile disc read only memory (DVD-ROM), a flash memory, a memory card, or the like is assumed.

As the display unit 16, for example, a liquid crystal display (LCD), an organic electro luminescence (EL) display, or the like is used. The display unit 16 integrally includes a touch panel, and receives various input operations by the user via the touch panel. For the touch panel, for example, a capacitive touch system is adopted. For the touch panel, a method other than the capacitive touch system may be adopted. The speaker 17 outputs a preset sound effect sound or the like in accordance with various input operations.

The document reading unit 18 captures documents one by one placed on a sheet feeding table of an automatic document feeder (not illustrated) provided in an upper portion of the image forming device 10, and optically reads the captured documents to obtain image information. Alternatively, the document reading unit 18 optically reads a document placed on a document table such as a platen glass to obtain image information.

The image forming unit 19 forms an image which is based on image information obtained through reading by the document reading unit 18 or image information obtained from an external personal computer (PC) or the like connected via a network on a recording medium such as paper. In the embodiment, an electrophotographic system will be described as an example of a system of forming an image, but another system such as an inkjet system may be adopted.

In a case in which the system of forming an image is an electrophotographic method, the image forming unit 19 includes a photosensitive drum, a charging unit, an exposure unit, a developing unit, a transfer unit, and a fixing unit. The charging unit applies a voltage to the photosensitive drum to charge the surface of the photosensitive drum. The exposure unit forms an electrostatic latent image on the photosensitive drum by exposing the photosensitive drum charged by the charging unit with light in accordance with image information. The developing unit forms a toner image on the photosensitive drum by developing the electrostatic latent image formed on the photosensitive drum with toner. The transfer unit transfers the toner image formed on the photosensitive drum to a recording medium. The fixing unit fixes the toner image transferred to the recording medium through heating and pressing.

The communication unit 20 is connected to a network such as the Internet, a local area network (LAN), or a wide area network (WAN), and can communicate with an external PC or the like via the network.

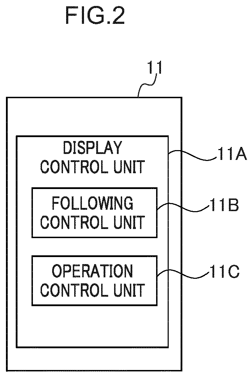

The CPU 11 of the image forming device 10 according to the present embodiment functions as each unit illustrated in Fig. 2 by writing and executing the information processing program 15A stored in the storage unit 15 in the RAM 13.

Fig. 2 is a block diagram illustrating an example of a functional configuration of the image forming device 10 according to the first embodiment.

As illustrated in Fig. 2, the CPU 11 of the image forming device 10 according to the present embodiment functions as a display control unit 11A. The display control unit 11A includes a following control unit 11B and an operation control unit 11C.

The display control unit 11A has a control function of controlling display of an image on the display unit 16 and a control function of controlling execution of an operation and stop of the execution of the operation in accordance with a display position of an operation unit displayed as an image on the display unit 16.

The following control unit 11B executes control such that an image is displayed on the display unit 16 and executes control such that an operation unit displayed as an image to follow a movement operation by the user is displayed. That is, when the user executes a movement operation on the operation unit while displaying the operation unit on the display unit 16, the following control unit 11B displays the operation unit at a position on the display unit 16 followed by the movement operation.

When the movement operation of the operation unit displayed to follow the movement operation by the user is completed, the operation control unit 11C controls non-execution or execution of the operation corresponding to the position of the operation unit. The non-execution of the operation is control for maintaining a state (for example, an initial state) in which the execution of the operation is not started by a movement operation which does not lead to the execution of the operation. The control of the execution of the operation includes control for executing a predetermined operation or control for stopping the execution of the predetermined operation.

Next, execution of an operation by the CPU 11 of the image forming device 10 according to the embodiment will be described. In the following description, execution of document copying will be described as an example of execution of an operation by the CPU 11. The execution of the operation is not limited to the execution of document copying and may be another process executed in the image forming device.

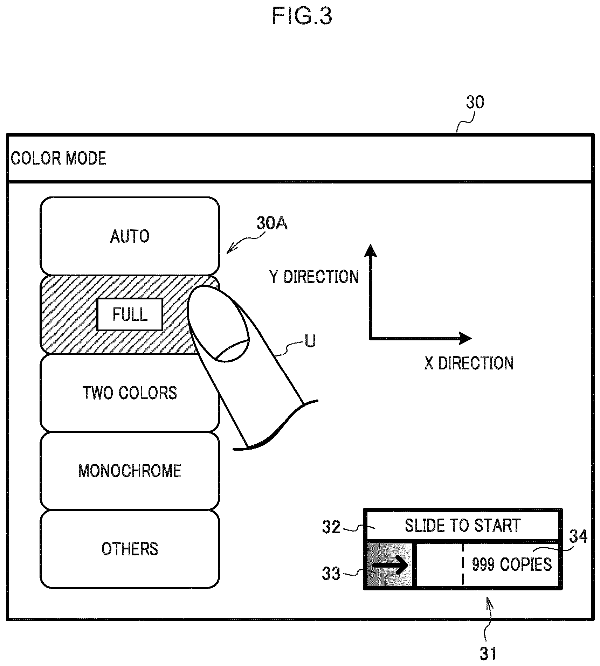

Fig. 3 is a diagram illustrating an example of a screen 30 displayed on the display unit 16 by the process of the CPU 11.

Fig. 3 illustrates an example of a setting screen on which a setting regarding color is executed when a document is copied by exemplifying a copying condition in an image copying function among document-related functions executed by the CPU 11. In the following description, a horizontal rightward direction and a vertical upward direction of the screen when the user views the screen are referred to as X and Y directions, respectively.

In the example of the screen 30, a selection instruction button 30A for instructing setting of a copying condition regarding a color when a document is copied is displayed. The copying condition is a setting of a function of the image forming device 10 that can be set in a case in which a copying target is copied (for example, a document), and the function is set as a parameter. In the example illustrated in Fig. 3, selection instruction buttons for giving an instruction for a setting related to any color of "auto", "full", "two colors", "monochrome", and "others" are displayed. The "auto" button of the selection instruction button is a button for automatically detecting a color of a document and giving an instruction to select copying with a color in the document. The "full" button is a button for selecting and giving an instruction to copy a document in multiple colors included in the image processing device 10. The "two colors" button is a button for selecting and giving an instruction for copying in two predetermined colors. The "monochrome" button is a button for selecting and giving an instruction for copying with a predetermined single color. The "others" button is a button for selecting and giving an instruction for copying by setting other colors. Since parameters of the copying conditions are a known technique, the description thereof will be omitted.

Fig. 3 illustrates a screen on which the "full" button is reversely displayed when the "full" button is pressed by the user operation as a state in which the setting of the copying condition is instructed.

On the screen 30 illustrated in Fig. 3, when a copying condition is instructed, an image is displayed in the instruction unit 31 for giving an instruction to execute copying. The instruction unit 31 includes a message area 32 for displaying a message, a slide mark 33 indicating a movable image for giving an instruction to execute copying, and a display area 34 for displaying the number of copies among the copying conditions. In the message area 32, a message indicating a user operation in a case in which execution of copying is instructed is displayed. In the example illustrated in Fig. 3, a message "slide to start" indicating that copying is executed (that is, started) by moving (that is, sliding) the slide mark 33 is displayed. The slide mark 33 can also be displayed at a position moved in the X direction (and the opposite direction). The slide mark 33 is an example of the operation unit.

In the example of Fig. 3, the message area 32 is an area where an explanation of an operation method is displayed, and the display content may not be changed, or the display content may be changed in accordance with an operation status. In the embodiment, a case in which the display content is not changed will be described as an example. When the slide mark 33 is pressed (hereinafter referred to as a touch) with the finger U of the user, the color changes, and a movement operation such as dragging or sliding becomes possible. In the display area 34, information which depends on a function (for example, a copy function, a print function, a facsimile function, a scanner function, and the like) of the image forming device 10, such as the number of copies and the number of transmissions, is displayed. The instruction unit 31 need not to include the message area 32.

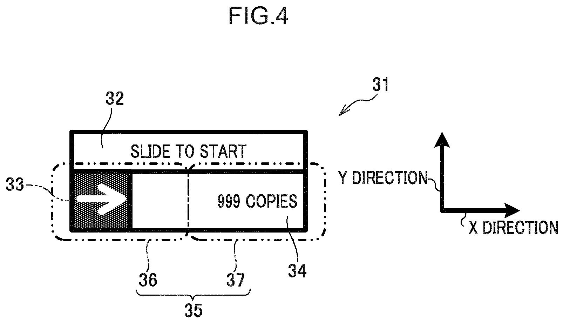

Fig. 4 is a diagram illustrating an example of the movable area 35 determined in advance for the instruction unit 31.

The instruction unit 31 includes a movable area 35 which is a movable area of the slide mark 33. The movable area 35 is an example of an area for determining non-execution of copying, execution of copying, and stopping of execution of copying in accordance with a position of the movably displayed slide mark 33. The movable area 35 includes a start area 36 and an execution area 37. The start area 36 is an area where a predetermined operation is not executed, and the execution area 37 is an area where a predetermined operation is executed. The predetermined operation described herein is, for example, an operation for giving an instruction to execute copying. In the example of Fig. 4, the message area 32 and the movable area 35 are included in the area indicating the instruction unit 31. In a case in which the message area 32 is not included in the area indicating the instruction unit 31, the entire area of the instruction unit 31 is the movable area 35.

Specifically, the execution area 37 is an area where the fact that execution of copying is executed is specified in a case in which there is the slide mark 33 at the time of completion of the movement operation in the area. The start area 36 is an area where the fact that copying is not executed (unexecuted) is specified in a case in which there is the slide mark 33 at the time of completion of the movement operation in the area.

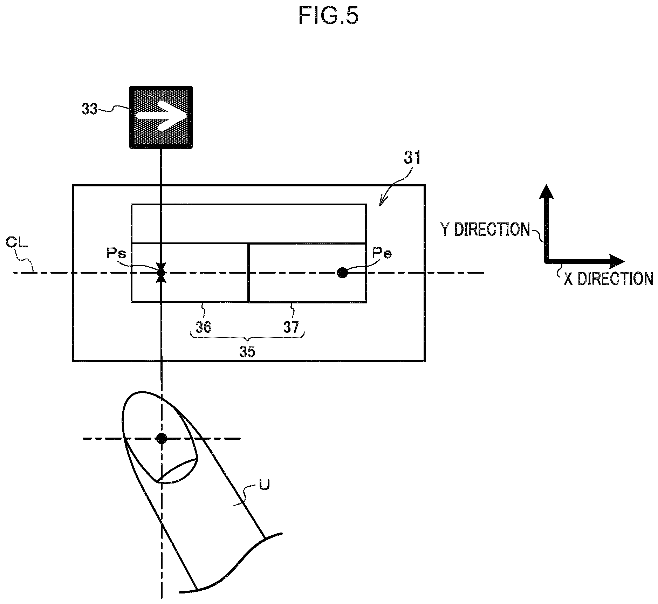

Fig. 5 is a schematic diagram illustrating an example of the relationship between the user operation and the position of the slide mark 33 with respect to the user operation in the instruction unit 31 displayed on the display unit 16.

The user U gives an instruction to execute copying while touching the slide mark 33 displayed on the instruction unit 31 of the display unit 16 with a finger of the user U and touching the slide mark 33 with the finger of the user U. The slide mark 33 is moved within the range in the X direction of the start area 36 and the execution area 37 on a line CL connecting the central positions in the Y direction of the start area 36 and the execution area 37. More specifically, in the slide mark 33, an initial position Ps which is a start point and an execution position Pe which is an end point are determined in advance, and can be displayed between the initial position Ps and the execution position Pe.

That is, the movement of the finger of the user U is a two-dimensional movement in the X direction and the Y direction. That is, the finger of the user U may be moved in an oblique direction. On the other hand, the movement of the slide mark 33 is a movement only in the movable area 35 in response to a movement operation by the user U, and the movement direction is limited to the X direction (or the opposite direction). The movement of the slide mark 33 is a one-dimensional movement.

For example, when the center of the slide mark 33 in the X direction is located on the side of the start area 36, it is determined that the slide mark is located in the start area 36. When the center of the slide mark 33 in the X direction is located on the side of the execution area 37, it is determined that the slide mark 33 is located in the execution area 37. A boundary between the start area 36 and the execution area 37 can be appropriately set by the user.

In the examples of Figs. 3 to 5, the instruction unit 31 is disposed laterally, but a disposition direction is not limited thereto. For example, the instruction unit 31 may be disposed vertically. In this case, the movement direction of the slide mark 33 is limited to the Y direction (or the opposite direction).

On the other hand, the image forming device 10 according to the present embodiment includes the following control unit 11B and the operation control unit 11C illustrated in Fig. 2 described above.

As an example, the following control unit 11B detects an operation position (for example, coordinates) touched with the finger of the user U on the screen 30 illustrated in Fig. 3 described above. A stylus pen or the like may be used instead of the finger of the user U. As described above, the movement operation here is, for example, an operation such as dragging or sliding. A trajectory of the movement operation is derived from a plurality of positions continuously detected by the movement operation. In a case in which the touch of the slide mark 33 with the finger of the user U is detected, the following control unit 11B derives the position of the slide mark 33 to follow the movement operation with the finger of the user U.

The operation control unit 11C controls a predetermined operation (hereinafter referred to as a "copying instruction operation" as an example.) based on the operation position with the user U and the position of the slide mark 33. Specifically, the operation control unit 11C executes the copying instruction operation in a case in which the movement operation is completed inside the instruction unit 31 after the movement of the slide mark 33 from the start area 36 to the execution position Pe in the execution area 37 by the movement operation (hereinafter referred to as an "operation execution process"). In a case in which the movement operation is stopped on the way, the operation control unit 11C is moved until the end portion regardless of the user operation (hereinafter referred to as a "stopping process on the way"). The end portion is an end point inside the execution area 37, and is a start end inside the start area 36. The execution position Pe is in contact with the end edge of the execution area 37, and the initial position Ps is in contact with the start end of the start area 36. In a case in which a predetermined position is touched after releasing on the way, the operation control unit 11C stops the slide mark 33 at the touched position (hereinafter referred to as a "stopping process").

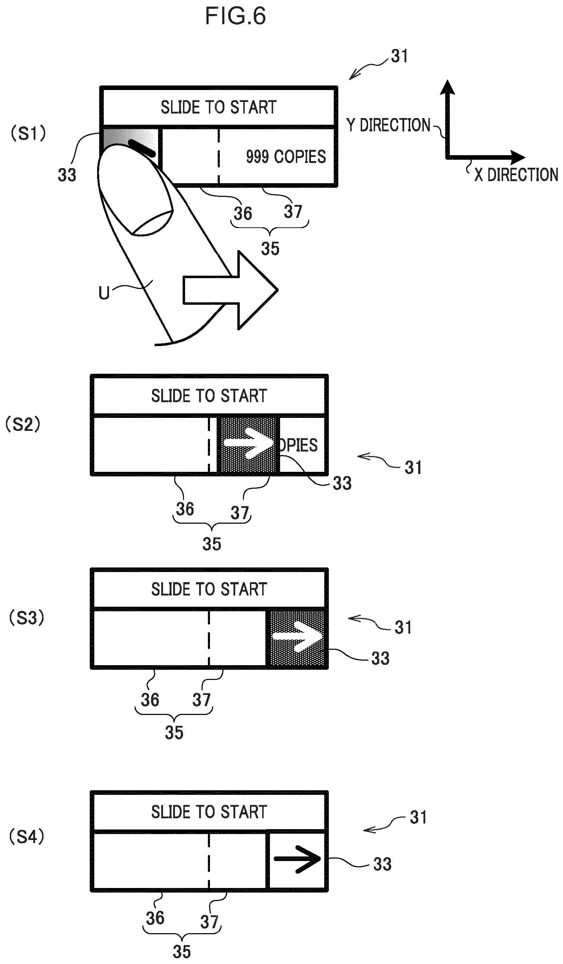

Next, the operation execution process according to the first embodiment will be specifically described with reference to Fig. 6.

Fig. 6 is a diagram illustrating the operation execution process according to the first embodiment.

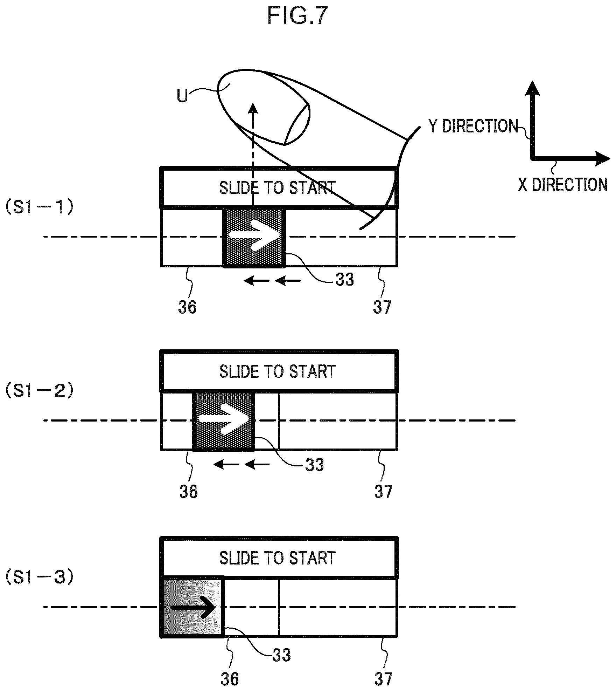

In (S1), when the slide mark 33 is touched with the finger of the user U, the CPU 11 detects the position and changes the color of the slide mark 33 to a color indicating a reservation for executing an operation. Then, the slide mark 33 is moved in an arrow direction (X direction) to follow the movement operation by the user U. In the initial state, the slide mark 33 is located at the initial position Ps in contact with the start end (here, the left end) of the start area 36. When the finger of the user U is detached in a state in which the slide mark 33 is separated from the start end and is located in the start area 36, it is determined that the movement operation is released on the way and the slide mark 33 is moved to the start end regardless of a user operation, that is, attracted to the start end, and the copying instruction operation is not executed. Hereinafter, the movement regardless of a user operation is referred to as "movement without a user operation". Fig. 7 is a diagram illustrating transition of movement in a case of releasing on the way in the start area 36. In (S1-1), the user U releases the touch of the finger on the way in the start area 36, and the movement of the slide mark 33 without a user operation is started. In (S1-2), the slide mark 33 is moved to the start end without a user operation. In (S1-3), the slide mark 33 is attracted to the start end and is returned to the initial state, and the execution of the copying instruction operation is stopped. In the following drawings, display of the display area 34 is omitted.

In (S2), when the CPU 11 further moves the slide mark 33 in the X direction to follow the movement operation by the user U, it is detected that the slide mark 33 has been moved over the start area 36 and reached the inside of the execution area 37. At this time, text (for example, 999 copies) of a portion through which the slide mark 33 passes enters non-display.

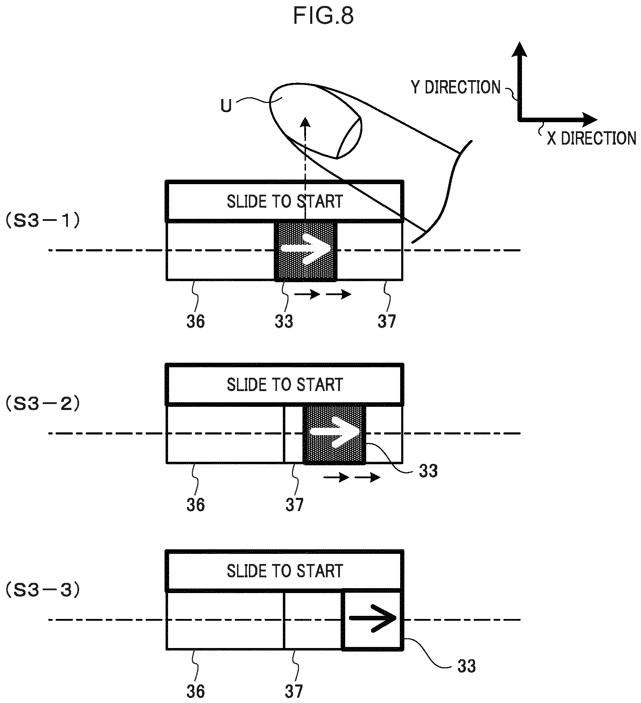

In (S3), when the CPU 11 further moves the slide mark 33 in the X direction to follow the movement operation by the user U, it is detected that the slide mark 33 has reached the end edge (here, the right end) of the execution area 37, that is, the execution position Pe. Here, when the finger of the user U is detached, it is determined that the movement operation has been completed. When the finger of the user U is detached in a state in which the slide mark 33 is located inside the execution area 37 and does not reach the execution position Pe, as described above, it is determined that the slide mark is released on the way, and the slide mark 33 is moved to the end edge without a user operation, that is, attracted to the end edge. Fig. 8 is a diagram illustrating transition of movement in a case of releasing on the way in the execution area 37. In (S3-1), the user U releases the touch of the finger on the way in the execution area 37, and the movement of the slide mark 33 without the user operation is started. In (S3-2), the slide mark 33 is being moved to the end edge without a user operation. In (S3-3), the slide mark 33 is attracted to the end edge, and the copying instruction operation is executed.

In (S4), the CPU 11 executes the copying instruction operation and changes the color of the slide mark 33 moved to the end edge of the execution area 37 to a color indicating the execution of the operation. The execution of the copying instruction operation is started at a time point at which the slide mark 33 is moved to the execution position Pe in the execution area 37.

In this case, the CPU 11 serving as the operation control unit 11C moves the slide mark 33 from the start area 36 into the execution area 37 to follow the movement operation by the user U, and further executes the copying instruction operation when detecting that the movement operation has been completed by the instruction unit 31.

Next, a case in which movement without a user operation is stopped will be described. In a case in which the user U wants to stop the movement without a user operation, the user U wants to stop the movement and determine execution or stopping in some cases. Therefore, by executing a touch operation on a touchable range TR, the movement without a user operation is stopped. Hereinafter, a touch for stopping movement without a user operation is referred to as a "touch operation". The "touch operation" is an example of a "selection". A "touchable range" is determined as a range in which a touch operation can be executed. In the description of the embodiment, the touchable range TR is the slide mark 33, the movable area 35, and the message area 32, that is, the entire instruction unit 31. The message area 32 included in touchable range TR is an example of a related area related to a predetermined operation. In this way, the touchable range TR may be set to be wider than the movable area 35. In the following description, a case in which a touch operation is executed on the slide mark 33 will be described as an example, but the slide mark may be either the movable area 35 or the message area 32. The "touchable range TR" is an example of a "predetermined position". The touchable range TR may be only the slide mark 33, may be only the movable area 35, or may be an area obtained by appropriately combining areas related to the copying instruction operation. In this way, the user U can easily stop the movement without a user operation.

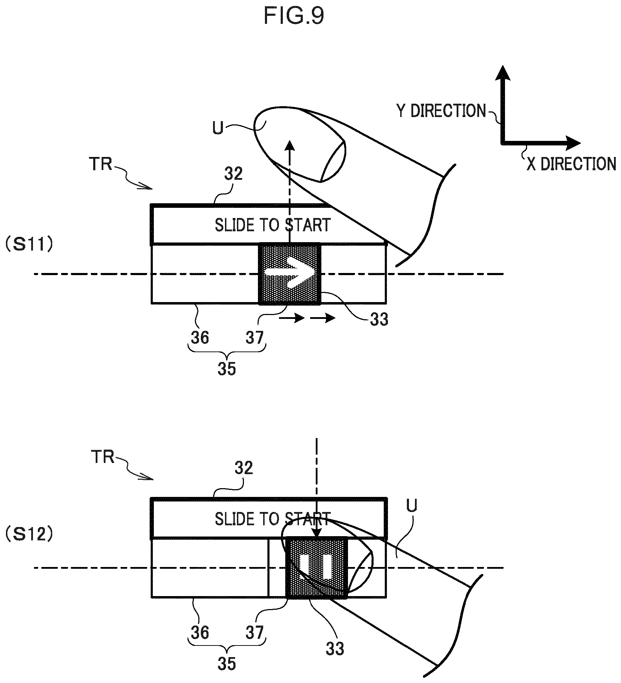

Fig. 9 is a diagram illustrating an example of a case in which movement without a user operation is stopped by a touch operation.

In (S11), the CPU 11 moves the slide mark 33 toward the start end by the releasing on the way without a user operation.

In (S12), the CPU 11 detects a position at which the touch operation by the user U is executed on the touchable range TR in a state of the movement without a user operation, and stops the movement of the slide mark 33. The CPU 11 changes the display form of the slide mark 33 from the right arrow mark to the stop mark.

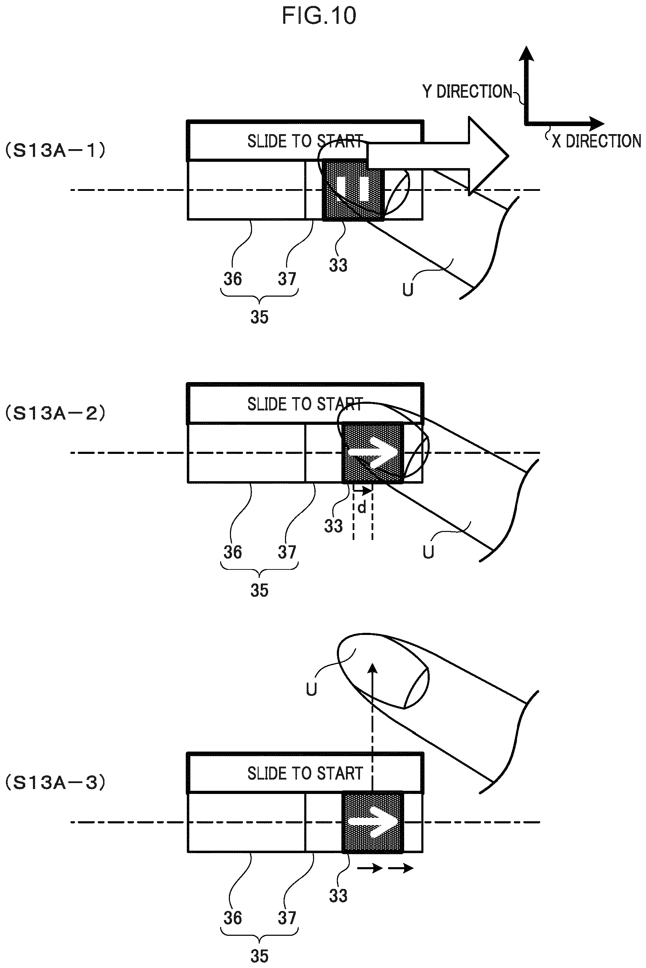

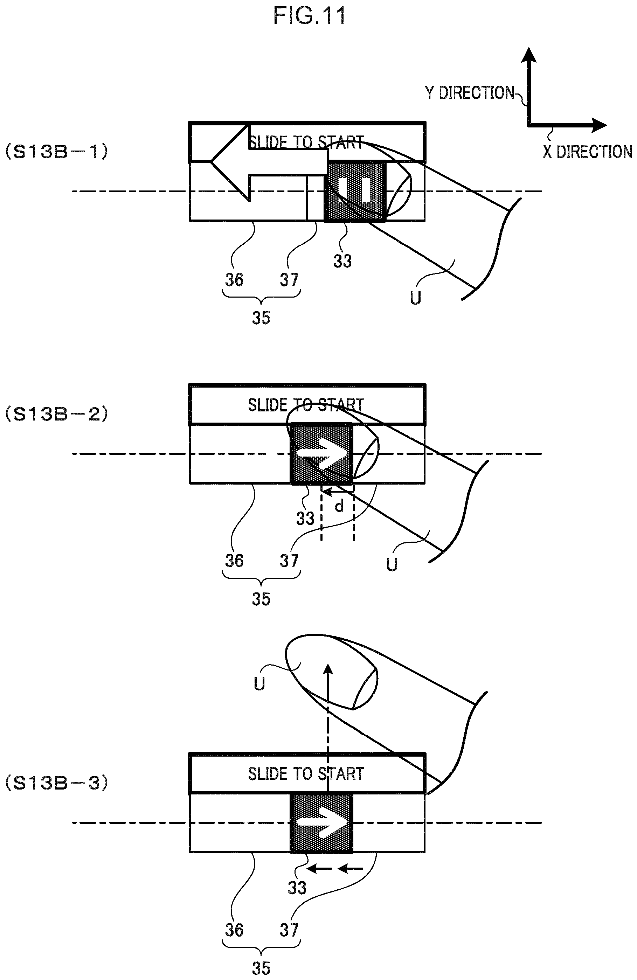

Next, an operation in a case in which the movement operation is executed after the stop will be described. Fig. 10 is a diagram illustrating an example of an operation in the case of movement toward the execution position Pe after the stopping. Fig. 11 is a diagram illustrating an example of an operation in the case of movement toward the initial position Ps after the stopping.

A case of the movement toward the execution position Pe after the stopping will be described. In (S13A-1), the CPU 11 detects a movement operation of the user U from the stopped position to the execution position Pe, and starts the movement of the slide mark 33 in the X direction. The CPU 11 changes the display form of the slide mark 33 from the stop mark to the right arrow mark using start of the movement operation as a trigger.

In (S13A-2), the CPU 11 moves the slide mark 33 by a predetermined distance d to follow the movement operation by the user U during the touch operation. In a case of the movement until the execution position Pe, the CPU 11 executes the copying instruction operation. The copying instruction operation may also be executed in a case in which the movement operation is released as in the state of (S13A-3).

In (S13A-3), the CPU 11 detects that the user U releases the movement operation during the touch operation. When the releasing is detected, the CPU 11 moves the position in the direction of the execution position Pe from the release position without a user operation and executes the copying instruction operation, as in (S3 -2). In a case in which the movement operation is released when the predetermined distance d is less than a threshold, the movement of the slide mark 33 may be stopped again. In a case in which the release position is within the execution area 37, an operation executed by the movement without an operation of the user U may be executed as in (S13A-3). Conversely, when the release position is not in the execution area 37 but in the start area 36, the state in which the movement is stopped may be maintained. In this way, the user U can execute the copying instruction operation by the movement operation again after the stopping.

A case of movement toward the initial position Ps after the stopping will be described. In (S13B-1), the CPU 11 detects the movement operation of the user U in a direction from the stopped position to the initial position Ps, and starts moving the slide mark 33 in the X direction. The CPU 11 changes the display form of the slide mark 33 from the stop mark to the right arrow mark using start of the movement operation as a trigger.

In (S13B-2), the CPU 11 moves the slide mark 33 by the predetermined distance d to follow the movement operation by the user U during the touch operation. In the case of the movement until the initial position Ps as it is, the execution of the copying instruction operation is stopped. The execution of the copying instruction operation may be stopped even in a case in which the movement operation is released as in the state of (S13B-3). In a case in which the movement operation is released when the predetermined distance d is less than a threshold, the movement of the slide mark 33 may be stopped again. In a case in which the release position is within the start area 36, as in (S13B-3), an operation of executing movement and stopping without an operation of the user U may be executed. Conversely, in a case in which the release position is not in the start area 36 but in the execution area 37, the state in which the movement is stopped may be maintained. In this way, the user U can stop executing the copying instruction operation by the movement operation again after the stopping.

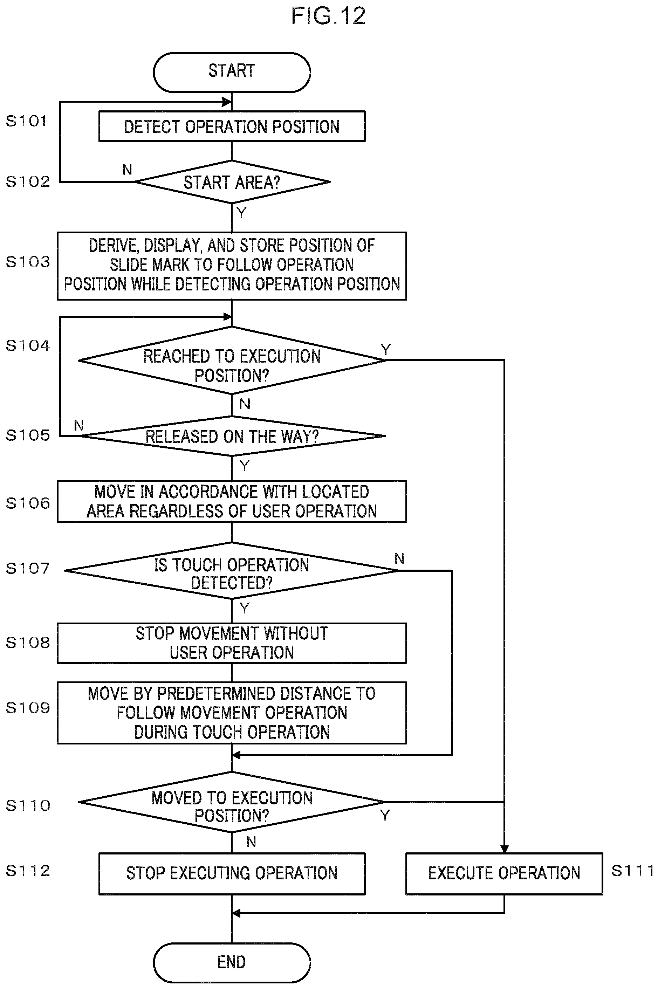

Next, an operational effect of the image forming device 10 according to the first embodiment will be described with reference to Fig. 12.

Fig. 12 is a flowchart illustrating an example of a flow of a process by the information processing program 15A according to the first embodiment.

First, as an example, when an instruction to execute display of the screen 30 illustrated in Fig. 3 is given to the image forming device 10, the information processing program 15A is started to execute the following steps. For facilitating description, a case of releasing on the way after reach to the execution area 37 will be described as an example. However, even in a case of releasing on the way before reach to the execution area 37, the process may be similarly executed.

In step S101, as an example, the CPU 11 detects an operation position touched with the finger of the user U on the screen 30 illustrated in Fig. 3 described above.

In step S102, the CPU 11 determines whether or not the operation position detected in step S101 is within the start area 36. In a case in which it is determined that the operation position is within the start area 36 (in the case of positive determination), the process proceeds to step S103. In case in which it is determined that the operation position is not within the start area 36 (in the case of negative determination), the process returns to step S101 and enters a standby state. In a case in which the slide mark 33 is in the start area 36, the display form of the slide mark 33 in the start area 36 is changed to a display form indicating a reservation for executing an operation in association with transition to step S103 (for example, the color is changed.).

In step S103, the CPU 11 derives the position of the slide mark 33 to follow the operation position while detecting the operation position by the finger of the user U, and displays and stores a derivation result. By the process of this step, the movement operation by the user U is reflected in the instruction unit 31, and the slide mark 33 is moved. The subsequent movement operation by the user U is continuously reflected in the process of this step.

In step S104, the CPU 11 determines whether or not the position of the slide mark 33 derived in step S103 has reached the execution position Pe. In a case in which it is determined that the position of the slide mark 33 has reached the execution position Pe (in the case of positive determination), the process proceeds to step S111. In a case in which it is determined that the position of the slide mark 33 has not reached the execution position Pe (in the case of negative determination), the process proceeds to step S105.

In step S105, the CPU 11 determines whether or not the movement operation by the user U has been released on the way. Whether the movement operation is released on the way is determined based on the fact that the finger of the user U is moved away from the slide mark 33. When it is determined that the movement operation is not released on the way (in the case of negative determination), the process returns to step S104 and is repeated. When it is determined that the movement operation has been released on the way (in the case of positive determination), the process proceeds to step S106.

In step S106, the CPU 11 moves the slide mark 33 toward the end without a user operation in accordance with the area where the slide mark is located. When the area where the slide mark 33 is located is the start area 36, the slide mark 33 is moved toward the initial position Ps. When the area where the slide mark 33 is located is the execution area 37, the slide mark 33 is moved toward the execution position Pe.

In step S107, the CPU 11 determines whether or not a touch operation by the user U has been detected. In a case in which it is determined that the touch operation has been detected (in the case of positive determination), the process proceeds to step S108. In a case in which it is determined that the touch operation has not been detected (in the case of negative determination), the process proceeds to step S110.

In step S108, the CPU 11 stops the movement without a user operation executed in step S106. In association with the stopping, the display form of the slide mark 33 is changed from the arrow mark to the stop mark.

In step S109, the CPU 11 moves the slide mark 33 by the predetermined distance d to follow the movement operation by the user U during the touch operation. The slide mark 33 is moved toward either the execution position Pe or the initial position Ps by the movement operation of the user U. The display form of the slide mark 33 is changed from the stop mark to the arrow mark in association with the start of the movement operation. It is assumed that the movement operation is released on the way or after movement to the end.

In step S110, the CPU 11 determines whether or not the movement is in the direction of the execution position Pe. The movement of a determination target is either movement without the user operation in step S106 or movement by the predetermined distance d in step S109. In a case in which the movement is not in the direction of the execution position Pe, the movement is in the direction of the initial position Ps. In a case in which it is determined that the movement is in the direction of the execution position Pe (in the case of positive determination), the process proceeds to step S111. In a case in which it is determined that the movement is not in the direction of the execution position Pe (in the case of negative determination), the process proceeds to step S112.

In step S111, the CPU 11 executes a copying instruction operation. Here, in execution of the copying instruction operation, it is assumed that a user operation of completing the movement operation is executed. A time point at which the movement operation is completed may be a time point of reach to the execution position Pe in step S104, a time point of releasing on the way in step S105, or a time point after the movement operation in step S109. In association with the execution, the display form of the slide mark 33 inside the execution area 37 is changed (for example, the color is changed.) to a display form indicating the execution of the operation, and the series of processes by the present information processing program 15A ends.

In step S112, the CPU 11 stops executing the copying instruction operation which is an example of a predetermined operation. As in the case of execution, it is assumed that the user operation of completion of the movement operation has been executed. In order to notify that the execution of the copying instruction operation has been stopped, for example, the display form of the slide mark 33 is changed (for example, the color is changed.), and the series of processes by the information processing program 15A ends.

In this way, according to the present embodiment, it is possible to prevent an unintended behavior of the user U in a case in which the movement operation is released on the way.

### [Second Embodiment]

In a second embodiment, a mode of operation in a case in which the user U releases a touch operation by detaching the finger without performing another operation after stopping of the slide mark 33 by the touch operation, that is, in a case in which a tap operation is executed, will be described.

Since constituent elements included in the image forming device according to the embodiment are the same as the constituent elements illustrated in Figs. 1 and 3 described above, repeated description thereof will be omitted here.

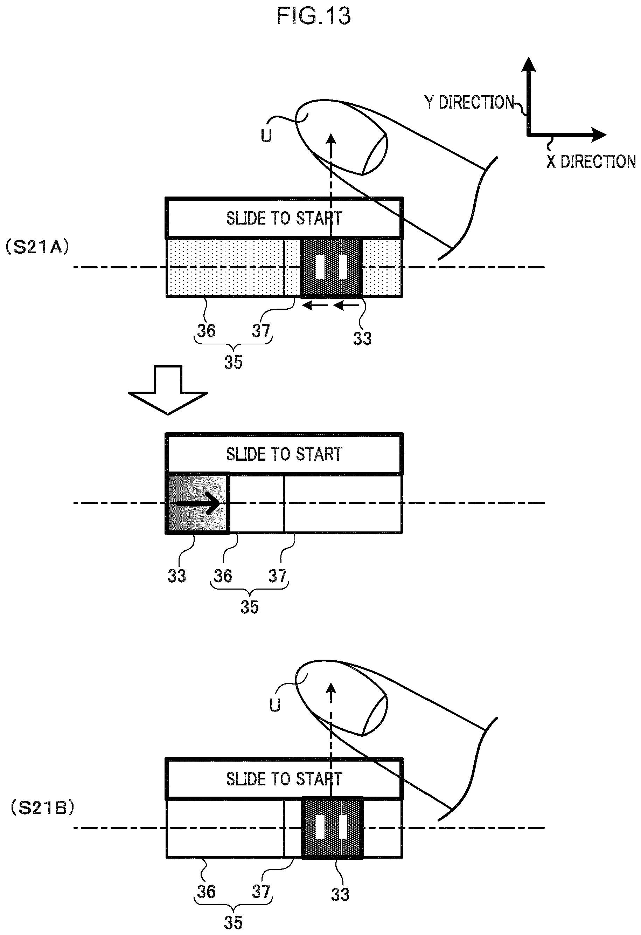

Fig. 13 is a diagram illustrating an example of an operation mode in a case in which a tap operation is executed in the second embodiment. When the tap operation is executed, one of the two operations (S21A) and (S21B) illustrated in Fig. 13 is set to be executed. Hereinafter, an operation of (S21A) or (S21B) is referred to as a "tap operation". (S21A) is an example of a case in which execution of the copying instruction operation is stopped when a tap operation is executed. (S21B) is an example of a case in which the movement of the slide mark 33 is maintained in a stopped state when a tap operation is executed. The touch operation can be executed again in the stopped state.

In (S21A), when the tap operation is detected, the CPU 11 stops the copying instruction operation and changes the movable area 35 to an unselectable state. Then, the slide mark 33 is moved to the start end to return to the initial state. In this case, the user U can immediately stop the copying instruction operation.

In (S21B), when the tap operation is detected, the CPU 11 maintains the stop state of the slide mark 33 illustrated in (S12). By executing the touch operation again from this state, the movement operation can be executed. In this way, the user can execute the movement operation again after the stop. In this way, the user U can examine and then determine a behavior of executing or stopping an operation in a state in which the operation is stopped.

As described above, according to the present embodiment, the user U can immediately stop the copying instruction operation. The user U can examine and then determine a behavior of executing or stopping an operation in a state in which the operation is stopped.

### [Third Embodiment]

In a third embodiment, a mode of a stop position in a case in which a touch operation is executed in an area other than the slide mark 33 will be described.

Since constituent elements included in the image forming device according to the embodiment are the same as the constituent elements illustrated in Figs. 1 and 3 described above, repeated description thereof will be omitted here.

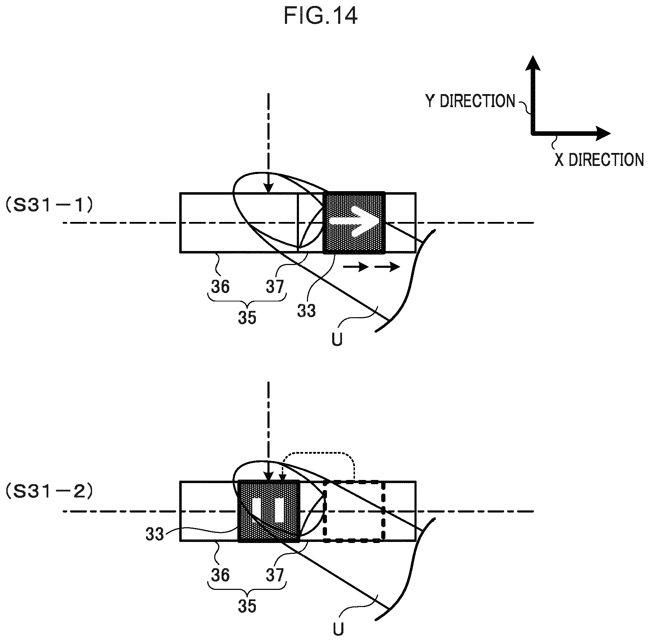

Fig. 14 is a diagram illustrating an example of a mode in which a stop position is moved to a position at which a touch operation has been executed in the third embodiment. Fig. 14 illustrates a case in which a touch operation is executed on a predetermined position of the start area 36 while the slide mark 33 is being moved in the execution area 37 regardless of a user operation.

In (S31-1), the CPU 11 detects that the finger of the user U touches the start area 36 and stops.

In (S31-2), the CPU 11 moves the central position of the slide mark 33 to the central position at which the touch operation has been executed and stops the slide mark 33 at the position after the movement. A similar process may be executed even in a case in which a touch operation is executed on a predetermined position in the execution area 37. When the touch operation is executed, the touch operation may be moved to the center of the movable area 35 corresponding to the Y direction in which the touch operation is executed. In this way, by moving the position at which the slide mark 33 is stopped to a position centering on the position at which the touch operation has been executed, the user U can stop the slide mark 33 at any position. The user U can execute the movement operation again from any position.

In this way, according to the present embodiment, the user U can stop the operation unit at any position.

### [Modified Example]

Modified examples of the above-described embodiment will be described.

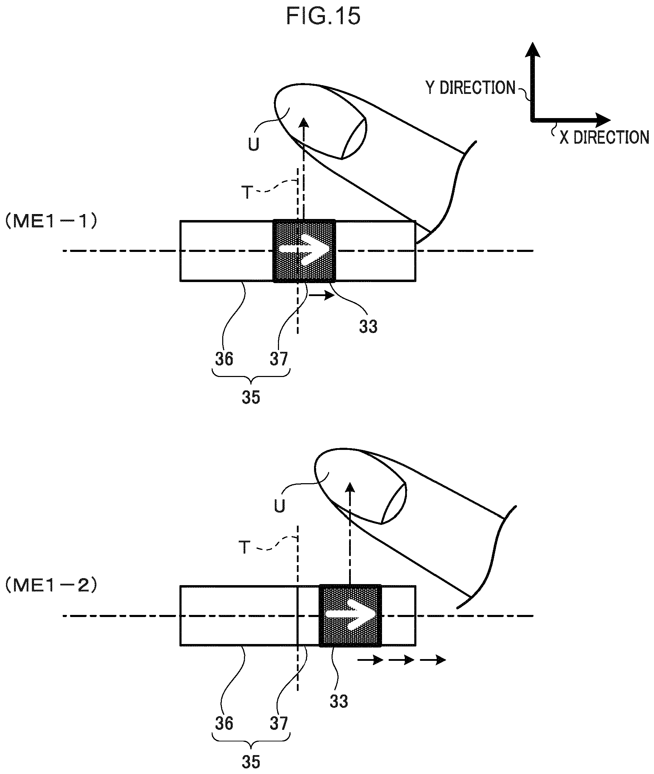

A modified example when a movement operation is released on the way will be described. Fig. 15 is a diagram illustrating an example of a modified example of a change in a speed in accordance with the release position. For example, a boundary at which the start area 36 and the execution area 37 are in contact with each other is defined as a threshold T. The closer the distance from the threshold T is, the slower a speed of movement regardless of the user operation is. Conversely, the farther the distance from the threshold T is, the faster the speed of movement regardless of a user operation is. In the example illustrated in Fig. 15, (ME1-1) shows an example of a state in which, since a distance from the threshold T is short, a speed of movement regardless of a user operation is late. (ME1-2) shows an example of a state in which, since the distance from the threshold T is long, the speed of the movement regardless of a user operation is increased. The case of the movement in the direction of the execution position for execution has been described as an example. The sample applies to a case of movement in a direction of the initial position Ps and stopping of the execution. In movement without a user operation, the speed may be changed in accordance with a position during the movement, and the speed may be increased step by step. The speed of the movement may be reduced in consideration of a case in which it is desired to stop on the way immediately before the execution position Pe or the initial position Ps which is the arrival point.

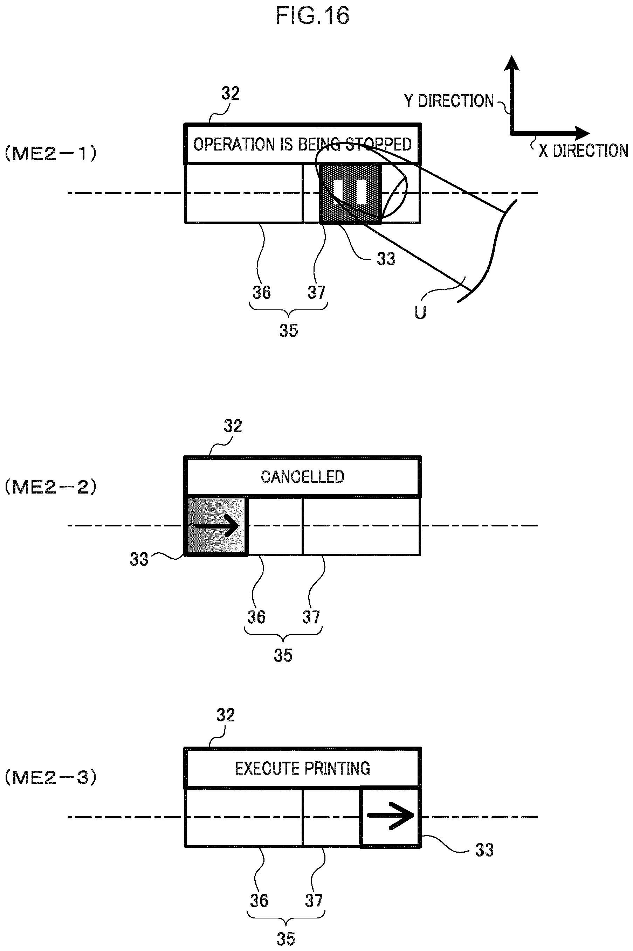

A modified example in which display content of a message in the message area 32 is changed will be described. Fig. 16 is a diagram illustrating an example of a modified example in a case in which display content of a message is changed. (ME2-1) indicates a display mode of the message area 32 in the stopped state of (S12). For example, a message "Operation is being stopped is displayed. The message is an example of an explanation (ME2-2) indicates a display mode of the message area 32 when the (S1-3) is stopped. For example, a message "Canceled" is displayed. (ME2-3) indicates a display mode of the message area 32 when (S4) is executed. For example, a message "Printing is executed" is displayed.

A modified example in which an execution sound is emitted will be described. When the slide mark 33 reaches the execution position Pe, the CPU 11 emits an execution sound for notifying that a copying instruction operation is executed. The execution sound may be emitted only in the case of movement to the execution position Pe regardless of the user operation. Since the user U executes the copying instruction operation regardless of the user operation without reaching the slide mark 33 to the execution position Pe, the user U is reliably notified of the execution. In the case of movement to the initial position Ps and stopping of the execution, a stop sound for notifying of the stop may be similarly emitted. Even in this case, the stop sound may be emitted only in a case of movement to the initial position Ps regardless of a user operation.

In addition, in each of the above-described embodiments, a processor is a processor in a broad sense, and includes a general-purpose processor (for example, a central processing unit (CPU) or the like) or a dedicated processor (for example, a graphics processing unit (GPU), an application specific integrated circuit (ASIC), a field programmable gate array (FPGA), a programmable logic device, and the like).

In addition, the operation of the processor in the above-described embodiment may be executed not only by one processor but also by cooperation of a plurality of processors existing at physically separated positions. The order of operations of the processor is not limited to the order described in each of the above-described embodiments, and may be appropriately changed.

The image forming device has been described above as an example of the information processing device according to each embodiment. The embodiment may be in the form of a program causing a computer to execute a function of each unit included in the image forming device. The embodiment may be in the form of a non-transitory computer-readable storage medium that stores the program.

In addition, the configuration of the image forming device described in each of the above embodiments is an example and may be changed according to the situation without departing from the gist.

The flow of the process of the program described in each of the above embodiments is also an example, and unnecessary steps may be deleted, new steps may be added, or the processing order may be changed within a scope without departing from the gist.

In each of the above embodiments, a case in which the process according to each embodiment is implemented by a software configuration using a computer by executing a program has been described, but the disclosure is not limited thereto. The embodiment may be implemented by, for example, a hardware configuration or a combination of a hardware configuration and a software configuration.

## Claims

1. An image forming device (10), comprising a processor (11), a read-only memory (12), a random access memory (13), an input/output interface (14), a storage unit (15), a display unit (16), a speaker (17), a document reading unit (18), an image forming unit (19) and a communication unit (20) and configured to perform a copy function, a print function, a facsimile function or a scanner function, wherein the processor (11) is configured to:
move an operation unit (33) so as to follow a movement operation performed by a user on the operation unit (33), which is displayed on the display unit (16),
execute a predetermined operation related to one of the functions after movement of the operation unit (33) from an initial position (Ps) to an execution position (Pe) on the display unit (16) is completed,
move the operation unit (33) toward the initial position (Ps) or the execution position (Pe) in accordance with a release position, other than by a user operation, in a case in which the movement operation is released on the way from the initial position (Ps) to the execution position (Pe), and
stop the movement of the operation unit (33) in a case in which the user selects a predetermined position (TR) of the display unit (16) while the operation unit (33) is moved other than by the user operation,
wherein the operation unit is a slide mark (33) which is movable in a first direction (X) and a second direction (X) that is an opposite direction to the first direction within an operable area (35),
wherein the operable area (35) at which the movement operation is enabled includes a start area (36) on a side of the initial position (Ps) and an execution area (37) on a side of the execution position (Pe), the slide mark (33) is moved toward the initial position (Ps) other than by the user operation when the release position at which the movement operation is released on the way is in the start area (36), and the slide mark (33) is moved toward the execution position (Pe) other than by the user operation when the release position at which the movement operation is released on the way is in the execution area (37).

2. The image forming device (10) according to claim 1, wherein execution of the predetermined operation of the operation unit (33) is cancelled in a case in which a selection is released without performing another operation after the stopping.

3. The image forming device (10) according to claim 1, wherein, in a case in which a selection is released without performing another operation after the stopping, a state in which movement of the operation unit (33) is stopped is maintained, and the movement operation is enabled.

4. The image forming device (10) according to any one of claims 1 to 3, wherein the movement operation is performed again from a stopped position after the stopping, and the predetermined operation is executed in a case in which the movement operation is released after movement of the operation unit (33) in a direction corresponding to the execution position (Pe).

5. The image forming device (10) according to any one of claims 1 to 4, wherein the movement operation is performed again from the stopped position after the stopping, and the execution of the predetermined operation is cancelled in a case in which the movement operation is released after the movement of the operation unit (33) in a direction corresponding to the initial position (Ps).

6. The image forming device (10) according to any one of claims 1 to 5, wherein the predetermined position (TR) is configured to be wider than an operable area (35) at which the movement operation is enabled.

7. The image forming device (10) according to any one of claims 1 to 5, wherein at least one area of the operation unit (33), an operable area (35) at which the movement operation is enabled, or a related area (32) related to the predetermined operation, is configured as the predetermined position (TR).

8. The image forming device (10) according to any one of claims 1 to 7, wherein an execution sound is emitted in a case in which the operation unit (33) has moved to the execution position (Pe) by movement other than by the user operation.

9. The image forming device (10) according to claim 1, wherein a speed of the movement other than by the user operation is changed in accordance with the release position at which the movement operation is released on the way.

10. The image forming device (10) according to any one of claims 1 to 9, wherein the stopped position of the operation unit (33) is moved to a position centering on the selected position.

11. The image forming device (10) according to any one of claims 1 to 10, wherein notification of the stopping is provided by a change in a display mode of the operation unit (33) or by an explanation displayed on the display unit (16).

12. An information processing program to operate an image forming device (10) the image forming device comprising a processor (11), a read-only memory (12), a random access memory (13), an input/output interface (14), a storage unit (15), a display unit (16), a speaker (17), a document reading unit (18), an image forming unit (19) and a communication unit (20) and configured to perform a copy function, a print function, a facsimile function or a scanner function, causing a computer to execute processing comprising:
moving an operation unit (33) so as to follow a movement operation performed by a user on the operation unit (33), which is displayed on the display unit (16);
executing a predetermined operation related to one of the functions after movement of the operation unit (33) from an initial position (Ps) to an execution position (Pe) on the display unit (16) is completed;
moving the operation unit (33) toward the initial position (Ps) or the execution position (Pe) in accordance with a release position, other than by a user operation, in a case in which the movement operation is released on the way from the initial position (Ps) to the execution position (Pe); and
stopping the movement of the operation unit (33) in a case in which the user selects a predetermined position (TR) of the display unit (16) while the operation unit (33) is moved other than by the user operation,
wherein the operation unit is a slide mark (33) which is movable in a first direction (X) and a second direction (X) that is an opposite direction to the first direction within an operable area (35),
wherein the operable area (35) at which the movement operation is enabled includes a start area (36) on a side of the initial position (Ps) and an execution area (37) on a side of the execution position (Pe), the slide mark (33) is moved toward the initial position (Ps) other than by the user operation when the release position at which the movement operation is released on the way is in the start area (36), and the slide mark (33) is moved toward the execution position (Pe) other than by the user operation when the release position at which the movement operation is released on the way is in the execution area (37).

## Patentansprüche

1. Bilderzeugungsvorrichtung (10), umfassend einen Prozessor (11), einen Nur-Lese-Speicher (12), einen Direktzugriffsspeicher (13), eine Eingabe-/Ausgabe-Schnittstelle (14), eine Speichereinheit (15), eine Anzeigeeinheit (16), einen Lautsprecher (17), eine Dokumentenleseeinheit (18), eine Bilderzeugungseinheit (19) und eine Kommunikationseinheit (20) und konfiguriert, eine Kopierfunktion, eine Druckfunktion, eine Faxfunktion oder eine Scannerfunktion auszuführen, wobei der Prozessor (11) konfiguriert ist, um:
eine Bedieneinheit (33) so zu bewegen, dass sie einer von einem Benutzer an der Bedieneinheit (33) ausgeführten Bewegungsbedienung folgt, die auf der Anzeigeeinheit (16) angezeigt wird,
einen mit einer der Funktionen in Zusammenhang stehenden vorbestimmten Vorgang auszuführen, nachdem Bewegung der Bedieneinheit (33) von einer Ausgangsposition (Ps) zu einer Ausführungsposition (Pe) auf der Anzeigeeinheit (16) abgeschlossen ist,
in einem Fall, in dem die Bewegungsbedienung auf dem Weg von der Ausgangsposition (Ps) zur Ausführungsposition (Pe) gelöst wird, die Bedieneinheit (33) anders als durch eine Benutzerbedienung gemäß einer Freigabeposition in Richtung der Ausgangsposition (Ps) oder der Ausführungsposition (Pe) zu bewegen, und
in einem Fall, in dem der Benutzer eine vorbestimmte Position (TR) der Anzeigeeinheit (16) wählt, während die Bedieneinheit (33) anders als durch Benutzerbedienung bewegt wird, die Bewegung der Bedieneinheit (33) anzuhalten,
wobei die Bedieneinheit eine Schiebemarkierung (33) ist, die in einer ersten Richtung (X) und einer zweiten Richtung (X), die eine der ersten Richtung entgegengesetzte Richtung ist, innerhalb eines bedienbaren Bereichs (35) bewegbar ist,
wobei der bedienbare Bereich (35), in dem die Bewegungsbedienung ermöglicht ist, einen Startbereich (36) auf einer Seite der Ausgangsposition (Ps) und einen Ausführungsbereich (37) auf einer Seite der Ausführungsposition (Pe) umfasst, die Schiebemarkierung (33) anders als durch die Benutzerbedienung in Richtung der Ausgangsposition (Ps) bewegt wird, wenn die Freigabeposition, an der die Bewegungsbedienung auf dem Weg gelöst wird, im Startbereich (36) ist, und die Schiebemarkierung (33) anders als durch die Benutzerbedienung in Richtung der Ausführungsposition (Pe) bewegt wird, wenn die Freigabeposition, an der die Bewegungsbedienung auf dem Weg gelöst wird, im Ausführungsbereich (37) ist.

2. Bilderzeugungsvorrichtung (10) gemäß Anspruch 1, wobei die Ausführung des vorbestimmten Vorgangs der Bedieneinheit (33) in einem Fall abgebrochen wird, in dem eine Auswahl gelöst wird, ohne dass nach dem Anhalten eine weitere Bedienung ausgeführt wird.

3. Bilderzeugungsvorrichtung (10) gemäß Anspruch 1, wobei in einem Fall, in dem eine Auswahl gelöst wird, ohne dass nach dem Anhalten ein anderer Vorgang ausgeführt wird, ein Zustand, in dem die Bewegung der Bedieneinheit (33) angehalten ist, beibehalten wird und die Bewegungsbedienung ermöglicht ist.

4. Bilderzeugungsvorrichtung (10) gemäß einem der Ansprüche 1 bis 3, wobei die Bewegungsbedienung nach dem Anhalten erneut aus einer angehaltenen Position durchgeführt wird und der vorbestimmte Vorgang in einem Fall ausgeführt wird, in dem die Bewegungsbedienung nach einer Bewegung der Bedieneinheit (33) in einer Richtung entsprechend der Ausführungsposition (Pe) gelöst wird.

5. Bilderzeugungsvorrichtung (10) gemäß einem der Ansprüche 1 bis 4, wobei die Bewegungsbedienung nach dem Anhalten erneut aus der angehaltenen Position durchgeführt wird und die Ausführung des vorbestimmten Vorgangs in einem Fall abgebrochen wird, in dem die Bewegungsbedienung nach der Bewegung der Bedieneinheit (33) in einer Richtung entsprechend der Ausgangsposition (Ps) gelöst wird.

6. Bilderzeugungsvorrichtung (10) gemäß einem der Ansprüche 1 bis 5, wobei die vorbestimmte Position (TR) konfiguriert ist, breiter zu sein als ein bedienbarer Bereich (35), in dem die Bewegungsbedienung ermöglicht ist.

7. Bilderzeugungsvorrichtung (10) gemäß einem der Ansprüche 1 bis 5, wobei mindestens ein Bereich der Bedieneinheit (33), ein bedienbarer Bereich (35), in dem die Bewegungsbedienung ermöglicht ist, oder ein zugehöriger Bereich (32), der mit dem vorbestimmten Vorgang in Zusammenhang steht, als vorbestimmte Position (TR) konfiguriert ist.

8. Bilderzeugungsvorrichtung (10) gemäß einem der Ansprüche 1 bis 7, wobei in einem Fall, in dem sich die Bedieneinheit (33) durch eine Bewegung anders als durch die Benutzerbedienung in die Ausführungsposition (Pe) bewegt hat, ein Ausführungsgeräusch ausgegeben wird.

9. Bilderzeugungsvorrichtung (10) gemäß Anspruch 1, wobei eine Geschwindigkeit der Bewegung, anders als durch die Benutzerbedienung, gemäß der Freigabeposition geändert wird, an der die Bewegungsbedienung auf dem Weg gelöst wird.

10. Bilderzeugungsvorrichtung (10) gemäß einem der Ansprüche 1 bis 9, wobei die angehaltene Position der Bedieneinheit (33) in eine auf der ausgewählten Position zentrierte Position bewegt wird.

11. Bilderzeugungsvorrichtung (10) gemäß einem der Ansprüche 1 bis 10, wobei die Benachrichtigung über das Anhalten durch eine Änderung in einem Anzeigemodus der Bedieneinheit (33) oder durch eine auf der Anzeigeeinheit (16) angezeigte Erklärung erfolgt.

12. Informationsverarbeitungsprogramm zum Bedienen einer Bilderzeugungsvorrichtung (10), die Bilderzeugungsvorrichtung umfassend einen Prozessor (11), einen Nur-Lese-Speicher (12), einen Direktzugriffsspeicher (13), eine Eingabe-/Ausgabe-Schnittstelle (14), eine Speichereinheit (15), eine Anzeigeeinheit (16), einen Lautsprecher (17), eine Dokumentenleseeinheit (18), eine Bilderzeugungseinheit (19) und eine Kommunikationseinheit (20), und konfiguriert, eine Kopierfunktion, eine Druckfunktion, eine Faxfunktion oder eine Scannerfunktion auszuführen, das einen Computer veranlasst eine Verarbeitung auszuführen, umfassend:
Bewegen einer Bedieneinheit (33), um einer von einem Benutzer an der Bedieneinheit (33) ausgeführten Bewegungsbedienung zu folgen, die auf der Anzeigeeinheit (16) angezeigt wird;
Ausführen eines mit einer der Funktionen in Zusammenhang stehenden vorbestimmten Vorgangs, nachdem Bewegung der Bedieneinheit (33) von einer Ausgangsposition (Ps) zu einer Ausführungsposition (Pe) auf der Anzeigeeinheit (16) abgeschlossen ist;
in einem Fall, in dem die Bewegungsbedienung auf dem Weg von der Ausgangsposition (Ps) zur Ausführungsposition (Pe) gelöst wird, Bewegen der Bedieneinheit (33) anders als durch eine Benutzerbedienung in Richtung der Ausgangsposition (Ps) oder der Ausführungsposition (Pe) gemäß einer Freigabeposition; und
in einem Fall, in dem der Benutzer eine vorbestimmte Position (TR) der Anzeigeeinheit (16) wählt während die Bedieneinheit (33) anders als durch die Benutzerbedienung bewegt wird, Anhalten der Bewegung der Bedieneinheit (33),
wobei die Bedieneinheit eine Schiebemarkierung (33) ist, die in einer ersten Richtung (X) und einer zweiten Richtung (X), die eine der ersten Richtung entgegengesetzte Richtung ist, innerhalb eines bedienbaren Bereichs (35) bewegbar ist,
wobei der bedienbare Bereich (35), in dem die Bewegungsbedienung ermöglicht ist, einen Startbereich (36) auf einer Seite der Ausgangsposition (Ps) und einen Ausführungsbereich (37) auf einer Seite der Ausführungsposition (Pe) umfasst, die Schiebemarkierung (33) anders als durch die Benutzerbedienung in Richtung der Ausgangsposition (Ps) bewegt wird, wenn die Freigabeposition, an der die Bewegungsbedienung auf dem Weg gelöst wird, im Startbereich (36) ist, und die Schiebemarkierung (33) anders als durch die Benutzerbedienung in Richtung der Ausführungsposition (Pe) bewegt wird, wenn die Freigabeposition, an der die Bewegungsbedienung auf dem Weg gelöst wird, im Ausführungsbereich (37) ist.

## Revendications

1. Dispositif de formation d'images (10), comprenant un processeur (11), une mémoire morte (12), une mémoire vive (13), une interface d'entrée/sortie (14), une unité de stockage (15), une unité d'affichage (16), un haut-parleur (17), une unité de lecture de documents (18), une unité de formation d'images (19) et une unité de communication (20), et configuré pour exécuter une fonction de copie, une fonction d'impression, une fonction de télécopie ou une fonction de scanner, dans lequel le processeur (11) est configuré pour :
déplacer une unité d'opération (33) de manière à suivre une opération de déplacement effectuée par un utilisateur sur l'unité d'opération (33), qui est affichée sur l'unité d'affichage (16),
exécuter une opération prédéterminée liée à l'une des fonctions une fois que le déplacement de l'unité d'opération (33) d'une position initiale (Ps) à une position d'exécution (Pe) sur l'unité d'affichage (16) est terminé,
déplacer l'unité d'opération (33) vers la position initiale (Ps) ou la position d'exécution (Pe) en fonction d'une position de libération, autre qu'une opération de l'utilisateur, dans le cas où l'opération de déplacement est libérée au cours du trajet entre la position initiale (Ps) et la position d'exécution (Pe), et
arrêter le déplacement de l'unité d'opération (33) dans le cas où l'utilisateur sélectionne une position prédéterminée (TR) de l'unité d'affichage (16) pendant que l'unité d'opération (33) est déplacée autrement que par l'opération de l'utilisateur,
dans lequel l'unité d'opération est une marque coulissante (33) qui peut être déplacée dans une première direction (X) et une deuxième direction (X) qui est une direction opposée à la première direction à l'intérieur d'une zone opérable (35),
dans lequel la zone opérable (35) dans laquelle l'opération de déplacement est activée inclut une zone de départ (36) d'un côté de la position initiale (Ps) et une zone d'exécution (37) d'un côté de la position d'exécution (Pe), la marque coulissante (33) est déplacée vers la position initiale (Ps) autrement que par l'opération de l'utilisateur lorsque la position de libération à laquelle l'opération de déplacement est libérée au cours du trajet se trouve dans la zone de départ (36), et la marque coulissante (33) est déplacée vers la position d'exécution (Pe) autrement que par l'opération de l'utilisateur lorsque la position de libération à laquelle l'opération de déplacement est libérée au cours du trajet se trouve dans la zone d'exécution (37).

2. Dispositif de formation d'images (10) selon la revendication 1, dans lequel l'exécution de l'opération prédéterminée de l'unité d'opération (33) est annulée dans le cas où une sélection est libérée sans effectuer d'autre opération après l'arrêt.

3. Dispositif de formation d'images (10) selon la revendication 1, dans lequel, dans le cas où une sélection est libérée sans effectuer d'autre opération après l'arrêt, un état dans lequel le déplacement de l'unité d'opération (33) est arrêté est maintenu, et l'opération de déplacement est activée.

4. Dispositif de formation d'images (10) selon l'une quelconque des revendications 1 à 3, dans lequel l'opération de déplacement est à nouveau effectuée à partir d'une position d'arrêt après l'arrêt, et l'opération prédéterminée est exécutée dans le cas où l'opération de déplacement est libérée après le déplacement de l'unité d'opération (33) dans une direction correspondant à la position d'exécution (Pe).

5. Dispositif de formation d'images (10) selon l'une quelconque des revendications 1 à 4, dans lequel l'opération de déplacement est à nouveau effectuée à partir de la position d'arrêt après l'arrêt, et l'exécution de l'opération prédéterminée est annulée dans le cas où l'opération de déplacement est libérée après le déplacement de l'unité d'opération (33) dans une direction correspondant à la position initiale (Ps).

6. Dispositif de formation d'images (10) selon l'une quelconque des revendications 1 à 5, dans lequel la position prédéterminée (TR) est configurée pour être plus large qu'une zone opérable (35) dans laquelle l'opération de déplacement est activée.

7. Dispositif de formation d'images (10) selon l'une quelconque des revendications 1 à 5, dans lequel au moins une zone de l'unité d'opération (33), une zone opérable (35) dans laquelle l'opération de déplacement est activée ou une zone liée (32) liée à l'opération prédéterminée, est configurée comme position prédéterminée (TR).

8. Dispositif de formation d'images (10) selon l'une quelconque des revendications 1 à 7, dans lequel un son d'exécution est émis dans le cas où l'unité d'opération (33) s'est déplacée vers la position d'exécution (Pe) par un déplacement autre que par l'opération de l'utilisateur.

9. Dispositif de formation d'images (10) selon la revendication 1, dans lequel une vitesse du déplacement autre que par l'opération de l'utilisateur est modifiée en fonction de la position de libération à laquelle l'opération de déplacement est libérée au cours du trajet.

10. Dispositif de formation d'images (10) selon l'une quelconque des revendications 1 à 9, dans lequel la position d'arrêt de l'unité d'opération (33) est déplacée vers une position centrée sur la position sélectionnée.

11. Dispositif de formation d'images (10) selon l'une quelconque des revendications 1 à 10, dans lequel la notification de l'arrêt est fournie par un changement dans un mode d'affichage de l'unité d'opération (33) ou par une explication affichée sur l'unité d'affichage (16).

12. Programme de traitement d'informations pour faire fonctionner un dispositif de formation d'images (10), le dispositif de formation d'images comprenant un processeur (11), une mémoire morte (12), une mémoire vive (13), une interface d'entrée/sortie (14), une unité de stockage (15), une unité d'affichage (16), un haut-parleur (17), une unité de lecture de documents (18), une unité de formation d'images (19) et une unité de communication (20) et étant configuré pour exécuter une fonction de copie, une fonction d'impression, une fonction de télécopie ou une fonction de scanner, amenant un ordinateur à exécuter un traitement consistant à :
déplacer une unité d'opération (33) de manière à suivre une opération de déplacement effectuée par un utilisateur sur l'unité d'opération (33), qui est affichée sur l'unité d'affichage (16),
exécuter une opération prédéterminée liée à l'une des fonctions une fois que le déplacement de l'unité d'opération (33) d'une position initiale (Ps) à une position d'exécution (Pe) sur l'unité d'affichage (16) est terminé,
déplacer l'unité d'opération (33) vers la position initiale (Ps) ou la position d'exécution (Pe) en fonction d'une position de libération, autre qu'une opération de l'utilisateur, dans le cas où l'opération de déplacement est libérée au cours du trajet entre la position initiale (Ps) et la position d'exécution (Pe) ; et
arrêter le déplacement de l'unité d'opération (33) dans le cas où l'utilisateur sélectionne une position prédéterminée (TR) de l'unité d'affichage (16) pendant que l'unité d'opération (33) est déplacée autrement que par l'opération de l'utilisateur,
dans lequel l'unité d'opération est une marque coulissante (33) qui peut être déplacée dans une première direction (X) et une deuxième direction (X) qui est une direction opposée à la première direction à l'intérieur d'une zone opérable (35),
dans lequel la zone opérable (35) dans laquelle l'opération de déplacement est activée inclut une zone de départ (36) d'un côté de la position initiale (Ps) et une zone d'exécution (37) d'un côté de la position d'exécution (Pe), la marque coulissante (33) est déplacée vers la position initiale (Ps) autrement que par l'opération de l'utilisateur lorsque la position de libération à laquelle l'opération de déplacement est libérée au cours du trajet se trouve dans la zone de départ (36), et la marque coulissante (33) est déplacée vers la position d'exécution (Pe) autrement que par l'opération de l'utilisateur lorsque la position de libération à laquelle l'opération de déplacement est libérée au cours du trajet se trouve dans la zone d'exécution (37).
